(19) Europäisches Patentamt
European Patent Office
Office européen des brevets

(11) **EP 3 571 840 B1**

(12) **EUROPEAN PATENT SPECIFICATION**

(45) Date of publication and mention
of the grant of the patent:
**15.09.2021 Bulletin 2021/37**

(51) Int Cl.:
*H04N 19/124* (2014.01)   *H04N 19/00* (2014.01)
*H04L 1/00* (2006.01)   *H04N 19/19* (2014.01)
*H04N 19/196* (2014.01)   *H04N 19/149* (2014.01)
*H04N 19/172* (2014.01)

(21) Application number: **18741391.9**

(22) Date of filing: **12.01.2018**

(86) International application number:
**PCT/CN2018/072444**

(87) International publication number:
**WO 2018/133734 (26.07.2018 Gazette 2018/30)**

(54) **RATE CONTROL**

RATENSTEUERUNG

RÉGULATION DE DÉBIT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.01.2017 PCT/CN2017/071491**

(43) Date of publication of application:
**27.11.2019 Bulletin 2019/48**

(73) Proprietor: **SZ DJI Technology Co., Ltd.
Shenzhen, Guangdong 518057 (CN)**

(72) Inventor: **ZHU, Lei
Shenzhen
Guangdong 518057 (CN)**

(74) Representative: **Appelt, Christian W.
Boehmert & Boehmert
Anwaltspartnerschaft mbB
Pettenkoferstrasse 22
80336 München (DE)**

(56) References cited:
WO-A1-98/17065   CN-A- 101 888 542
CN-A- 102 036 062   CN-A- 102 970 540
CN-A- 106 170 089   US-A1- 2010 266 047
US-B2- 7 062 429

## Description

### TECHNICAL FIELD

The present disclosure relates to data encoding and, more particularly, to a method and apparatus for rate control, a multi-rate encoding apparatus, and a transmitting terminal.

### BACKGROUND

One challenge in a low-latency video/image transmission system is that a condition of a channel, such as channel bandwidth, varies over time, particularly for a wireless channel. There are many factors affecting the wireless channel, such as physical distance, relative position, and obstacles/occlusions between receiving and transmitting terminals, immediate electromagnetic interference, and the like. Furthermore, a data source of the transmission also varies over time. The source time-variation and the channel time-variation are independent of each other and are difficult to predict, which cause difficulties in adapting source encoding to the channel bandwidth in real-time. For example, when the channel is stable, a sudden movement of the camera or a large movement of the object in the camera view leads to a sudden change in the size of the encoded data stream. If the size of the data stream is doubled, the transmission latency/delay is doubled accordingly. When the source is stable, the size of the data stream remains constant, but a sudden channel variation can still cause transmission jitter (transmission latency that varies over time). If the channel bandwidth reduces by one half, the transmission latency is increased by two times accordingly.

Rate control technologies that adapt encoding rate to the channel bandwidth in real-time have been widely used in the wireless video transmission applications to ensure a smooth transmission over unreliable channels. Conventional rate control technologies only control the overall average bitrate of a group of frames (e.g., multiple frames). Because only one sample point including two elements, e.g., a coding parameter value and a corresponding bitrate value, is generated per frame, several sample points are needed to be generated from multiple frames over a given time period for estimating the parameters of the rate control model. As such, the conventional rate control technologies stabilize the average bitrate over a given time period (e.g., multiple frames) at an expected bitrate to ensure that the overall jitter averaged over multiple frames or a period of time is small. However, the low-latency video transmission requires stabilizing the bitrate per frame within a certain range to avoid large transmission jitter that cause the playback frequently stop at the receiving terminal.

WO98/17065 A1 discloses a system for encoding in parallel three (or more) times the same block of DCT coefficients from the same picture. The associated encoded streams and measured bit rate information are sent to a controller selecting the encoded stream whose bit rate is the closest as possible from a desired bit rate. Then a bit rate quantisation model is updated for the encoding of the next frame using the three computed pairs of bit rate-quantisation.

US2010/266047 A1 discloses a system to determine quantization for an image. A first rough estimation of the quantization is performed using interpolation from a given set of points associating bit rate and quantisation and obtained with first parallel pre-coding. Then, according to the first quantisation estimate, a second fine estimation is performed using either a linear model or an exponential model depending on where the rough estimate is located in the quantisation-bit rate curve.

### SUMMARY

The invention is defined by claim 1 according to which a method for rate control is defined and claim 13 according to which an apparatus for rate control in data coding is defined. Preferred embodiments are described in the dependent claims.

### BRIEF DESCRIPTION OF THE DRAWINGS

FIG. 1 is a schematic diagram showing a transmitting terminal according to exemplary embodiments of the disclosure.
FIG. 2 is a schematic block diagram showing a multi-rate encoding apparatus according to an exemplary embodiment of the disclosure.
FIG. 3 is schematic block diagram showing a single-rate encoder according to exemplary embodiments of the disclosure.
FIG. 4 is a schematic block diagram showing a multi-rate encoding apparatus according to another exemplary embodiment of the disclosure.
FIG. 5 is a schematic block diagram showing a multi-rate encoding apparatus according to another exemplary embodiment of the disclosure.

FIG. 6 is a schematic diagram illustrating a process of updating a rate control model per frame according to exemplary embodiments of the disclosure.

FIG. 7 is flow chart of a rate control method according to exemplary embodiments of the disclosure.

FIG. 8 a flow chart showing a process of iteratively updating a rate control model according to exemplary embodiments of the disclosure.

FIG. 9 schematically shows a variation of a bitrate versus quantization parameter (QP) curve (R-Q curve) between frames according to exemplary embodiments of the disclosure.

## DETAILED DESCRIPTION OF THE EMBODIMENTS

Hereinafter, embodiments consistent with the disclosure will be described with reference to the drawings, which are merely examples for illustrative purposes and are not intended to limit the scope of the disclosure. Wherever possible, the same reference numbers will be used throughout the drawings to refer to the same or like parts.

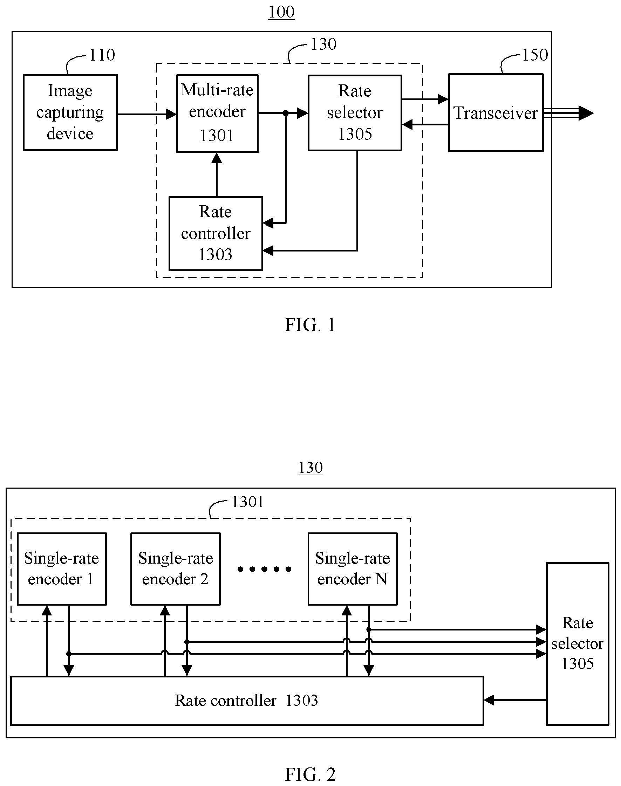

FIG. 1 is a schematic diagram showing an exemplary transmitting terminal 100 consistent with the disclosure. The transmitting terminal 100 is configured to capture images and encode the images according to a plurality of coding parameter values to generate a plurality of encoded data streams, also referred to as a plurality of encoded data streams. The images may be still images, e.g., pictures, and/or moving images, e.g., videos. Hereinafter, the term "image" is used to refer to either a still image or a moving image. The coding parameter refers to a parameter associated with the encoding process, such as a quantization parameter (QP), a coding mode selection, a packet size, or the like. Each of the plurality of encoded data streams is generated using a corresponding one of the plurality of coding parameter values and corresponds to one of a plurality of bitrate values. The transmitting terminal 100 is further configured to select one of the plurality of encoded data streams as an output data stream for transmitting over a transmission channel.

In some embodiments, the transmitting terminal 100 may be integrated in a mobile body, such as an unmanned aerial vehicle (UAV), a driverless car, a mobile robot, a driverless boat, a submarine, a spacecraft, a satellite, or the like. In some other embodiments, the transmitting terminal 100 may be a hosted payload carried by the mobile body that operates independently but may share the power supply of the mobile object.

The transmission channel may use any form of communication connection, such as the Internet connection, cable television connection, telephone connection, wireless connection, or another connection capable of supporting the transmission of images. For example, if the transmitting terminal 100 is integrated in a UAV, the transmission channel can be a wireless channel. The transmission channel may use any type of physical transmission medium, such as cable (e.g., twisted-pair wire cable and fiber-optic cable), air, water, space, or any combination of the above media. For example, if the transmitting terminal 100 is integrated in a UAV, one or more of the multiple channels of encoded data streams can be over air. If the transmitting terminal 100 is a hosted payload carried by a commercial satellite, one or more of the multiple channels of encoded data streams can be over space and air. If the transmitting terminal 100 is a hosted payload carried by a submarine, one or more of the multiple channels of encoded data streams can be over water.

As shown in FIG. 1, the transmitting terminal 100 includes an image capturing device 110, a multi-rate encoding apparatus 130 coupled to the image capturing device 110, and a transceiver 150 coupled to the multi-rate encoding apparatus 130.

The image capturing device 110 includes an image sensor and a lens or a lens set, and is configured to capture images. The image sensor may be, for example, an opto-electronic sensor, such as a charge-coupled device (CCD) sensor, a complementary metal-oxide-semiconductor (CMOS) sensor, or the like. The image capturing device 110 is further configured to send the captured images to the multi-rate encoding apparatus 130 for encoding. In some embodiments, the image capturing device 110 may include a memory for storing, either temporarily or permanently, the captured images.

The multi-rate encoding apparatus 130 is configured to receive the images captured by the image capturing device 110, and encode the images according to the plurality of coding parameter values to generate the plurality of encoded data streams. Each of the plurality of encoded data streams is generated using a corresponding one of the plurality of coding parameter values and corresponds to one of the plurality of bitrate values. As shown in FIG. 1, the multi-rate encoding apparatus 130 includes a multi-rate encoder 1301, a rate controller 1303, and a rate selector 1305 coupled to each other. Further, the multi-rate encoder 1301 is coupled to the image capturing device 110. The rate selector 1305 is coupled to the transceiver 150.

The multi-rate encoder 1301 may receive and encode the images captured by the image capturing device 110 according to any suitable video coding standard, also referred to as video compression standard, such as Windows Media Video (WMV) standard, Society of Motion Picture and Television Engineers (SMPTE) 421-M standard, Moving Picture Experts Group (MPEG) standard, e.g., MPEG-1, MPEG-2, or MPEG-4, H.26x standard, e.g., H.261, H.262, H.263, or H.264, or another standard.

In some embodiments, the video coding standard may be selected according to the video coding standard supported by a decoder, the channel conditions, the image quality requirement, and/or the like. For example, an image encoded using the MPEG standard needs to be decoded by a corresponding decoder adapted to support the appropriate MPEG standard. A lossless compression format may be used to achieve a high image quality requirement, and a lossy compression format may be used to adapt to limited transmission channel bandwidth.

In some embodiments, the multi-rate encoder 1301 may implement one or more different codec algorithms. The selection of the codec algorithm may be based on encoding complexity, encoding speed, encoding ratio, encoding efficiency, and/or the like. For example, a fast codec algorithm may be performed in real-time on a low-end hardware. A high encoding ratio algorithm may be desirable for a transmission channel with a small bandwidth.

In some other embodiments, the multi-rate encoder 1301 may further perform at least one of encryption, error-correction encoding, format conversion, or the like. For example, when the images captured by the image capturing device 110 contains confidential information, the encryption may be performed before transmission or storage to protect confidentiality.

FIG. 2 is a schematic block diagram showing an example of the multi-rate encoding apparatus 130 consistent with the disclosure. As shown in FIG. 2, the multi-rate encoder 1301 includes a plurality of single-rate encoders for generating the plurality of encoded data streams. Each single-rate encoder can generate one of the plurality of encoded data streams having a corresponding one of the plurality of bitrates according to one of the plurality of coding parameter values. In some embodiments, the plurality of single-rate encoders may be separate parts or partially separate parts sharing one or more common circuits.

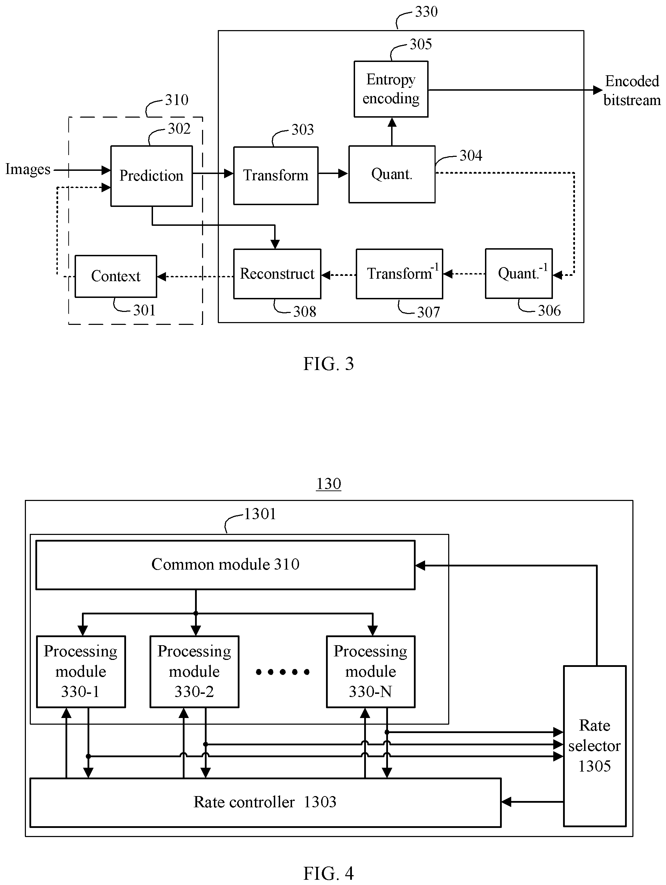

FIG. 3 is a schematic block diagram showing an exemplary single-rate encoder. As shown in FIG. 3, the single-rate encoder includes a "forward path" connected by solid-line arrows and an "inverse path" connected by dashed-line arrows in the figure. The "forward path" includes conducting an encoding process on an entire image frame or a block, e.g., a macroblock (MB), of the image frame, and the "inverse path" includes implementing a reconstruction process, which generates context 301 for prediction of a next image frame or a next block of the next image frame. An image frame refers to a complete image. Hereinafter, the terms "frame," "image," and "image frame" are used interchangeably.

The size and type of the block of the image frame may be determined according to the encoding standard that is employed. For example, a fixed-sized MB covering $16 \times 16$ pixels is the basic syntax and processing unit employed in H.264 standard. H.264 also allows the subdivision of an MB into smaller sub-blocks, down to a size of $4 \times 4$ pixels, for motion-compensation prediction. An MB may be split into sub-blocks in one of four manners: $16 \times 16$, $16 \times 8$, $8 \times 16$, or $8 \times 8$. The $8 \times 8$ sub-block may be further split in one of four manners: $8 \times 8$, $8 \times 4$, $4 \times 8$, or $4 \times 4$. Therefore, when H.264 standard is used, the size of the block of the image frame can range from $16 \times 16$ to $4 \times 4$ with many options between the two as described above.

In some embodiments, as shown in FIG. 3, the "forward path" includes a prediction process 302, a transformation process 303, a quantization process 304, and an entropy encoding process 305. In the prediction process 302, a predicted block can be generated according to a prediction mode. The prediction mode can be selected from a plurality of intra-prediction modes and/or a plurality of inter-prediction modes that are supported by the video encoding standard that is employed. Taking H.264 for an example, H.264 supports nine intra-prediction modes for luminance $4 \times 4$ and $8 \times 8$ blocks, including eight directional modes and an intra direct component (DC) mode that is a non-directional mode. For luminance $16 \times 16$ blocks, H.264 supports four intra-prediction modes, i.e., Vertical mode, Horizontal mode, DC mode, and Plane mode. Further, H.264 supports all possible combination of inter-prediction modes, such as variable block sizes (i.e., $16 \times 16$, $16 \times 8$, $8 \times 16$, $8 \times 8$, $8 \times 4$, $4 \times 8$, $4 \times 4$) used in inter-frame motion estimation, different inter-frame motion estimation modes (i.e., use of integer, half, or quarter pixel motion estimation), multiple reference frames.

In the plurality of intra-prediction modes, the predicted block is created using a previously encoded block from the current frame. In the plurality of inter-prediction modes, the previously encoded block from a past or a future frame (a neighboring frame) is stored in the context 301 and used as a reference for inter-prediction. In some embodiments, a weighted sum of two or more previously encoded blocks from one or more past frames and/or one or more future frames can be stored in the context 301 for inter-prediction.

In some embodiments, the prediction process 302 can also include a prediction mode selection process (not shown). In some embodiments, the prediction mode selection process can include determining whether to apply the intra-prediction or the inter-prediction on the block. In some embodiments, which one of the intra-prediction or inter-prediction to be applied on the block can be determined according to the position of the block. For example, if the block is in the first image frame of a video or in an image frame at one of random access points of the video, the block may be intra-coded. On the other hand, if the block is in one of the remaining frames, i.e., images frames other than the first image frame, of the video or in an image frame between two random access points, the block may be inter-coded. An access point may refer to, e.g., a point in the stream of the video from which the video is started to be encoded or transmitted, or from which the video is resumed to be encoded or transmitted. In some other embodiments, which one of the intra-prediction or inter-prediction to be employed on the block can be determined according to a transmission error, a sudden change of channel conditions, or the like. For example, if a transmission error occurs or a sudden change of channel conditions occurs when the block is generated, the block can be intra-predicted.

In some embodiments, the prediction mode selection process can further include selecting an intra-prediction mode for the block from the plurality of intra-prediction modes when intra-prediction is determined to be employed and an inter-prediction mode from the plurality of inter-prediction modes when inter-prediction is determined to be employed. Any suitable prediction mode selection technique may be used here. For example, H.264 uses a Rate-Distortion Optimization (RDO) technique to select the intra-prediction mode or the inter-prediction mode that has a least rate-distortion (RD) cost for the block.

The predicted block is subtracted from the block to generate a residual block.

In the transformation process 303, the residual block is transformed into a representation in the spatial-frequency domain (also referred to as spatial-spectrum domain), in which the residual block can be expressed in terms of a plurality of spatial-frequency domain components, e.g., cycles per spatial unit in X and Y directions. Coefficients associated with the spatial-frequency domain components in the spatial-frequency domain expression are also referred to as transform coefficients. Any suitable transformation method, such as a discrete cosine transform (DCT), a wavelet transform, or the like, can be used here. Taking H.264 as an example, the residual block is transformed using a $4 \times 4$ or $8 \times 8$ integer transform derived from the DCT.

In the quantization process 304, quantized transform coefficients can be obtained by dividing the transform coefficients with a quantization step size ($Q_{step}$) for associating the transformed coefficients with a finite set of quantization steps. In some embodiments, a QP can be used to determine the $Q_{step}$. The relation between the value of QP and $Q_{step}$ may be linear or exponential according to different encoding standards. Taking H.263 as an example, the relationship between the value of QP and $Q_{step}$ is that $Q_{step} = 2 \times QP$. Taking H.264 as another example, the relationship between the value of QP and $Q_{step}$ is that $Q_{step} = 2^{QP/6}$.

In some embodiments, an expected bitrate can be achieved by adjusting the value of a coding parameter, for example, the value of QP. Small values of QP can more accurately approximate the spatial frequency spectrum of the residual block, i.e., more spatial detail can be retained, but at the cost of more bits and higher bitrates in the encoded data stream. Large values of QP represent big step sizes that crudely approximate the spatial frequency spectrum of the residual block such that most of the spatial detail of residual block the can be captured by only a few quantized transform coefficients. That is, as the value of QP increases, some spatial detail is aggregated such that the bitrate drops, but at the price of loss of quality. For example, H.264 allows a total of 52 possible values of QP, which are 0, 1, 2, ..., 51, and each unit increase of QP lengthens the $Q_{step}$ by 12% and reduces the bitrate by roughly 12%.

In the entropy encoding process 305, the quantized transform coefficients are entropy encoded. In some embodiments, the quantized transform coefficients may be reordered (not shown) before entropy encoding. The entropy encoding can convert symbols into binary codes, e.g., a data stream or a bitstream, which can be easily stored and transmitted. For example, context-adaptive variable-length coding (CAVLC) is used in H.264 standard to generate data streams. The symbols that are to be entropy encoded include, but are not limited to, the quantized transform coefficients, information for enabling the decoder to recreate the prediction (e.g., selected prediction mode, partition size, and the like), information about the structure of the data stream, information about a complete sequence (e.g., MB headers), and the like.

In some embodiments, as shown in FIG. 3, the "inverse path" includes an inverse quantization process 306, an inverse transformation process 307, and a reconstruction process 308. The quantized transform coefficients are inversely quantized and inversely transformed to generate a reconstructed residual block. The inverse quantization is also referred to as a re-scaling process, where the quantized transform coefficients are multiplied by $Q_{step}$ to obtain rescaled coefficients, respectively. The rescaled coefficients are inversely transformed to generate the reconstructed residual block. An inverse transformation method corresponding to the transformation method used in the transformation process 303 can be used here. For example, if an integer DCT is used in the transformation process 303, a reverse integer DCT can be used in the reverse transformation process 307. The reconstructed residual block is added to the predicted block in the reconstruction process 308 to create a reconstructed block, which is stored in the context 301 as a reference for prediction of the next block.

In some embodiments, the single-rate encoder may be a codec. That is, the single-rate encoder may also include a decoder (not shown). The decoder conceptually works in a reverse manner including an entropy decoder (not shown) and the processing elements defined within the reconstruction process, shown by the "inverse path" in FIG. 3. The detailed description thereof is omitted here.

FIG. 4 is a schematic block diagram showing a multi-rate encoding apparatus 130 according to the invention. As shown in FIG. 4, the multi-rate encoder 1301 include the plurality of single-rate encoders that share a common circuit 310 and have separate processing circuits 330 to generate the plurality of encoded data streams with different bitrates. Referring again to FIG. 3, the processing circuit 330 can perform the transform process 303, the quantization process 304, the entropy encoding process 305, the inverse quantization process 306, the inverse transform process 307, and the reconstruction process 308. The common circuit 310 can perform the prediction process 302, of which the computational complexity and the computing resource consumption may account for about 70% of the overall calculations of the single-rate encoder. As such, the multi-rate encoder 1301 with the structure shown in FIG. 4 and described above can reduce resource consumption.

Referring again to FIGs. 2 and 4, the rate controller 1303 is configured to adjust the plurality of coding parameter values of the multi-rate encoder 1301 to control the plurality of bitrate values of the plurality of encoded data streams generated by the multi-rate encoder 1301, according to a rate control model. The rate control model characterizes a correspondence between coding parameter and bitrate. In some embodiments, the rate controller 1303 can implement a rate control method consistent with the disclosure, such as one of the exemplary rate control methods described below.

In some embodiments, as shown in FIGs. 2 and 4, when the multi-rate encoder 1301 includes the plurality of single-rate encoders, the rate controller 1303 can be coupled to the plurality of single-rate encoders and can be configured to adjust the coding parameter value of each single-rate encoder to control the bitrate value of the encoded data stream generated by each single-rate encoder, according to the rate control model.

The rate selector 1305 is configured to select one of the plurality of encoded data streams as the output data stream based on, for example, a current channel capacity, a current channel bandwidth, a transmission latency, and/or the like, and send the output data stream to the transceiver 150 for transmitting. In some embodiments, the rate selector 1305 can be also configured to obtain feedback information including, for example, the current channel capacity, the current channel bandwidth, the transmission latency, and/or the like, from the transceiver 150.

In some embodiments, as shown in FIGs. 2 and 4, when the multi-rate encoder 1301 includes the plurality of single-rate encoders, the rate selector 1305 can be coupled to the plurality of single-rate encoders and can be configured to select one of the plurality of encoded data streams as the output data stream from the corresponding single-rate encoder based on, for example, the current channel capacity, the current channel bandwidth, the transmission latency, and/or the like.

Referring again to FIG. 1, the transceiver 150 is configured to obtain the output data stream from the rate selector 1305 and transmit the output data stream over the transmission channel. In some embodiments, the transceiver 150 is further configured to receive the feedback information including, for example, the current channel capacity, the current channel bandwidth, the transmission latency, and/or the like, from a receiving terminal over the transmission channel, and send the feedback information to the rate selector 1305.

The transceiver 150 can include a transmitter and a receiver, and can be configured to have two-way communications capability, i.e., can both transmit and receive data. In some embodiments, the transmitter and the receiver may share common circuitry. In some other embodiments, the transmitter and the receiver may be separate parts sharing a single housing. The transceiver 150 may work in any suitable frequency band, for example, the microwave band, millimeter-wave band, centimeter-wave band, optical wave band, or the like.

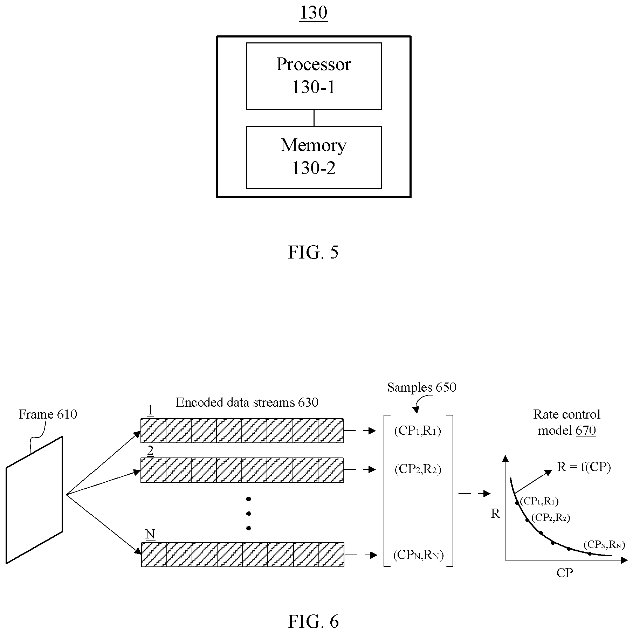

According to the disclosure, the image capturing device 110, the multi-rate encoding apparatus 130, and the transceiver 150 can be separate devices, or any two or all of them can be integrated in one device. In some embodiments, the image capturing device 110, the multi-rate encoding apparatus 130, and the transceiver 150 are separate devices that can be connected or coupled to each other through wired or wireless means. For example, the image capturing device 110 can be a camera, a camcorder, or a smartphone having a camera function. FIG. 5 is a schematic block diagram showing another example of multi-rate encoding apparatus 130 consistent with the disclosure. As shown in FIG. 5, the multi-rate encoding apparatus 130 includes one or more processors 130-1 and one or more memories 130-2. The one or more processors 130-1 can include any suitable hardware processor, such as a microprocessor, a micro-controller, a central processing unit (CPU), a network processor (NP), a digital signal processor (DSP), an application specific integrated circuit (ASIC), a field-programmable gate array (FPGA), or another programmable logic device, discrete gate or transistor logic device, discrete hardware component. The one or more memories 130-2 store computer program codes that, when executed by the one or more processors, control the one or more processors to perform a rate control method consistent with the disclosure, such as one of the exemplary rate control methods described below, and the encoding functions of the method consistent with the disclosure. The one or more memories can include a non-transitory computer-readable storage medium, such as a random access memory (RAM), a read only memory, a flash memory, a volatile memory, a hard disk storage, or an optical medium. The transceiver 150 can be an independent device combining a transmitter and a receiver in a single package.

In some other embodiments, the image capturing device 110, the multi-rate encoding apparatus 130, and the transceiver 150 are integrated in a same electronic device. For example, the image capturing device 110 may include an image sensor and a lens or a lens set of the electronic device. The multi-rate encoding apparatus 113 may be implemented by one or more single-chip encoders, one or more single-chip codecs, one or more image processor, one or more image processing engine, or the like, which are integrated in the electronic device. The transceiver 150 may be implemented by an integrated circuit, a chip, or a chipset that is integrated in the electronic device. For example, the electronic device may be a smartphone having a built-in camera and a motherboard that integrates the multi-rate encoding apparatus 130 and the transceiver 150.

In some other embodiments, any two of the image capturing device 110, the multi-rate encoding apparatus 130, and the transceiver 150 are integrated in a same electronic device. For example, the image capturing device 110 can be a camera or a camcorder that is coupled to an electronic device having a motherboard that integrates the multi-rate encoding apparatus 130 and the transceiver 150.

Exemplary rate control methods consistent with the disclosure will be described in more detail below. A rate control method consistent with the disclosure can be implemented in a multi-rate encoding apparatus consistent with the disclosure. The multi-rate encoding apparatus can be configured as a portion of a transmitting terminal. The multi-rate encoding apparatus and the transmitting terminal can be, for example, the multi-rate encoding apparatus 130 and the transmitting terminal 100 described above.

As described above, the bitrate of an encoded data stream can be controlled by controlling a coding parameter, such as a quantization parameter, used for encoding image frames. To obtain an encoded data stream having a desired bitrate (also referred to as an "expected bitrate"), the coding parameter can be selected according to a rate control model describing correspondences between coding parameters and bitrates. The rate control model can also be updated during the encoding process based on calculation/encoding results during the encoding process. In some embodiments, the rate control model can be updated based on the encoding process of one frame or based on the encoding process of a plurality of frames.

FIG. 6 schematically illustrates a process for updating the rate control model per frame consistent with the disclosure. As shown in FIG. 6, a frame 610 is encoded using a plurality of coding parameter values (denoted using letters $CP_1$, $CP_2$, ..., and $CP_N$ in FIG. 6) to generate a plurality of encoded data streams 630 having a plurality of bitrate values (denoted using letters $R_1$, $R_2$, ..., and $R_N$ in FIG. 6). Each of the plurality of coding parameter values $CP_i$ corresponds to one of the plurality of bitrate values $R_i$ ($i$ = 1, 2,..., N). For example, $CP_1$ corresponds to $R_1$, $CP_2$ corresponds to $R_2$, $CP_N$ corresponds to $R_N$, and so on. The plurality of ($CP_i$, $R_i$) pairs form a plurality of sample points 650, which can then be applied to a rate control model 670 for determining/updating parameters of the rate control model 670 according to, for example, a fitting method.

According to the process shown in FIG. 6, the parameters of the rate control model can be updated or estimated per frame. Thus, a frame-level rate control that can stabilize the bitrate per frame at an expected bitrate can be achieved. The frame-level rate control can avoid frequent playback stops at the receiving terminal due to large transmission jitter. The overall perceptual quality of a video can be enhanced and the user experience can be improved.

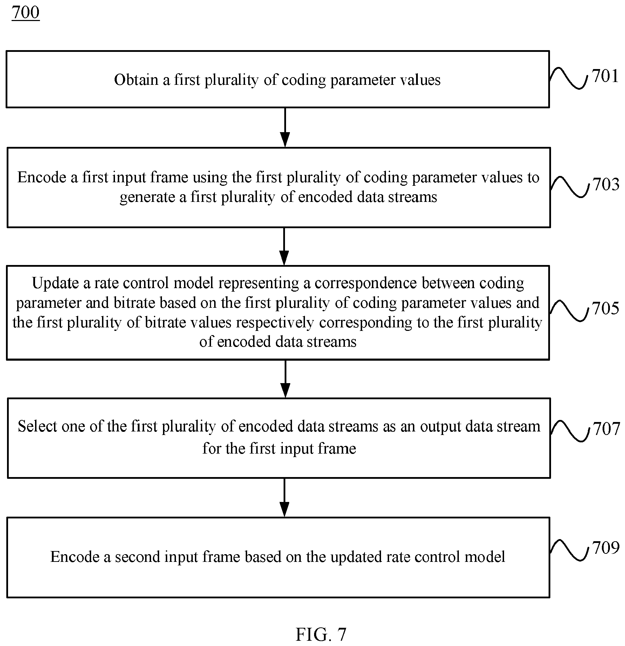

FIG. 7 is flow chart of an exemplary rate control method 700 consistent with the disclosure. According to the rate control method 700, a rate controller, such as the rate controller 1303 of the multi-rate encoding apparatus 130 described above, can control a plurality of coding parameter values of a multi-rate encoder, such as the multi-rate encoder 1301 of the multi-rate encoding apparatus 130 described above, according to which a plurality of encoded data streams having a corresponding plurality of bitrate values can be generate by the multi-rate encoder. A rate selector, such as the rate selector 1305 of the multi-rate encoding apparatus 130 described above, can select one of the plurality of encoded data streams as the output data stream based on, for example, the current channel capacity, the current channel bandwidth, the transmission latency, and/or the like.

As shown in FIG. 7, at 701, a first plurality of coding parameter values are obtained. The first plurality of coding parameter values may include a plurality of coding parameter values for encoding a first input frame. In some embodiments, the first input frame can be a first one of image frames captured by an image capturing device and sent to a multi-rate encoder for encoding. The image capturing device can be, for example, the image capturing device 110 described above. The multi-rate encoder can be, for example, the multi-rate encoder 1301 of the multi-rate encoding apparatus 130 described above. In some other embodiments, the first input frame can be an image frame in the stream of a video from which the video is started to be encoded or transmitted, or from which the video is resumed to be encoded or transmitted. In some other embodiments, the first input frame can be any one of image frames captured by the image capturing device or any image frame in the stream of a video.

In some embodiments, the first plurality of coding parameter values are provided by a rate control model based at least in part on an expected bitrate for the first input frame (also referred to as a "first expected bitrate"). That is, one of the first plurality of coding parameter values is provided by the rate control model based on an expected bitrate for the first input frame, which can also be referred to as a "first main coding parameter value." The remaining ones of the first plurality of coding parameter values, i.e., those of the first plurality of coding parameter values other than the first main coding parameter value, can be referred to as first auxiliary coding parameter values.

Any suitable rate control model can be used here. For example, the rate control model can include a quantizer-domain (Q-domain) rate control model (also referred to as a rate quantization (R-Q) model), that characterizes the relationship between bitrate and QP, a rho-domain (p-domain) rate control model that characterizes the relationship between bitrate and parameter p (the percentage of zeros among the quantized transform coefficients), or a Lambda-domain ($\lambda$-domain) rate control model (also referred to as a rate-lambda (R-$\lambda$) model) that characterizes the relationship between bitrate and the Lagrange multiplier $\lambda$ corresponding to QP for each frame.

In some embodiments, the rate control model may have initial parameters that are pre-stored in a rate controller, such as the rate controller 1303 of the multi-rate encoding apparatus 130 described above. A coding parameter value corresponding to the expected bitrate value for the first input frame obtained according to the rate control model can be set as the first main coding parameter value. Taking an R-Q model as an example, the coding parameter can be the QP and the R-Q model can be expressed as an exponential of the second-order polynomial:

$$R(Q) = \exp(a \cdot Q^2 + b \cdot Q + c)$$

where $R$ represents the value of bitrate, $Q$ represents the value of QP and, $a$, $b$, and c represent parameters. The coding parameter value corresponding to the expected bitrate value for the first input frame can be calculated from the above exponential of the second-order polynomial with initial $a$, $b$, and $c$ values.

In some embodiments, the expected bitrate for the first input frame can be a preset bitrate. In some embodiments, the expected bitrate for the first input frame can be obtained from a user input. In some other embodiments, the expected bitrate for the first input frame can be determined based on, for example, the channel capacity, the channel bandwidth, the transmission latency, or the like.

In some embodiments, the first auxiliary coding parameter values can be gradually deviated from the first main coding parameter value at a coding parameter interval. For example, the first auxiliary coding parameter values can be gradually stepped down or stepped up from the first main coding parameter value and arranged at the coding parameter interval. As another example, one or some of the first auxiliary coding parameter values can be obtained by gradually stepping down from the first main coding parameter value and one or some of the first auxiliary coding parameter values can be obtained by gradually stepping up from the first main coding parameter value.

In some embodiments, the determination of the preset coding parameter interval may be a tradeoff between the computation complexity and the estimation accuracy of the parameters of the rate control model. For example, a large coding parameter interval leads to a small number of coding parameter values, which can reduce the computational burden, but may increase the estimation error of the parameters of the rate control model. On the other hand, a fine coding parameter interval can generate a plurality of coding parameter values that are densely distributed over a certain range, which can reduce the estimation error of the parameters of the rate control model, but may increase the computational burden.

In some embodiments, the coding parameter interval can be a constant interval, i.e., the interval between each pair of neighboring coding parameter values is the same. In some other embodiments, the coding parameter interval can be a variable interval, i.e., the interval between each pair of neighboring coding parameter values may vary from pair to pair, or may be the same among some pairs of neighboring coding parameter values but different among some other pairs. In the embodiments of varying coding parameter interval, the interval can be, for example, varied with the curvature of a curve of the coding parameter versus the bitrate. For example, a large interval can be used for one or some of the first auxiliary coding parameter values falling on a portion of the curve that has a relatively small curvature, and a fine interval can be used for one or some of the first auxiliary coding parameter values falling on a portion of the curve that has a relatively large curvature.

In the embodiments described above, the first auxiliary coding parameter values are obtained by first obtaining the first main coding parameter value and then calculating the first auxiliary coding parameter values according to a preset interval. In some other embodiments, the first auxiliary coding parameter values can be obtained based on selected bitrates for the first input frame. Such selected bitrates for the first input frame are also referred to as "first auxiliary bitrate values." For example, the first auxiliary bitrate values can be gradually deviated from the expected bitrate for the first input frame at a bitrate interval. Similar to the coding parameter interval, the bitrate interval also can be constant or variable, and can be determined in a similar manner as determining the coding parameter interval. For example, the first auxiliary bitrate values can be obtained by gradually stepping down and/or stepping up from the expected bitrate for the first input frame and arranged at the bitrate interval. The first auxiliary coding parameter values corresponding to the first auxiliary bitrate values can be calculated according to the rate control model.

At 703, the first input frame is encoded using the first plurality of coding parameter values to generate a first plurality of encoded data streams. Each of the first plurality of encoded data streams is generated using a corresponding one of the first plurality of coding parameter values and has a corresponding one of a first plurality of bitrate values.

In some embodiments, the first input frame can be intra-encoded using the first plurality of coding parameter values to generate the first plurality of encoded data streams. In some embodiments, encoding the first input frame using one of the first plurality of coding parameter values can include a prediction process, a transformation process, a quantization process, and an entropy encoding process.

In some embodiments, the encoding processes of the first input frame using the first plurality of coding parameter values can be separate processes and implemented in parallel. For example, as shown in FIG. 2, the multi-rate encoding apparatus 130 can include a plurality of separate single-rate encoders, each single-rate encoder can be used to encode the first input frame using one of the first plurality of coding parameter values to generate a corresponding one of the first plurality of encoded data streams.

According to the invention, the encoding processes of the first input frame using the first plurality of coding parameter values can include at least one common process. For example, as shown in FIGs. 3 and 4, the encoding processes of the first input frame using the first plurality of coding parameter values can share a common prediction process in the common circuit 310 and use separate transformation processes, separate quantization processes, and separate entropy encoding processes in the separate processing circuits 330-1, 330-2, ... 330-N to generate the first plurality of encoded data streams. The computational complexity and the computing resource consumption can be reduced by sharing the common prediction circuit 310.

At 705, the rate control model can be updated based on the first plurality of coding parameter values and the first plurality of bitrate values respectively corresponding to the first plurality of encoded data streams. That is, updated parameters of the rate control model can be obtained based on the first plurality of coding parameter values and the first plurality of bitrate values respectively corresponding to the first plurality of encoded data streams. Thus, an updated rate control model can be generated with the updated parameters. Taking the R-Q model described above as an example, an updated R-Q curve can be modeled by the least-squares fitting of the exponential of the second-order polynomial described above based on the first plurality of coding parameter values and the first plurality of bitrate values respectively corresponding to the first plurality of encoded data streams, such that the updated values of $a$, $b$, and $c$ can be obtained.

In the embodiments described above, the rate control model is updated once using one input frame and then used for encoding the next input frame. In some scenarios, one updating may not be enough to create an updated rate control model that closely models the actual correspondence relationship between the coding parameter and the bitrate. The degree of approximation between the updated rate control model and the actual correspondence relationship between the coding parameter and the bitrate can be determined by a difference between a first actual bitrate value and the expected bitrate value. The first actual bitrate value refers to a bitrate value obtained by encoding the first input frame using the first main coding parameter value. Therefore, in some other embodiments, the rate control model can be iteratively updated using the first input frame until a difference between the first actual bitrate value and the expected bitrate value is within a preset range, e.g., smaller than a preset value.

At 707, one of the first plurality of encoded data streams is selected as an output data stream for the first input frame. The selection of the one of the first plurality of encoded data streams can be based on, for example, the expected bitrate value for the first input frame, the channel capacity, the channel bandwidth, the transmission latency, and/or the like.

In some embodiments, the output data stream for the first input frame can be selected from the first plurality of encoded streams according to the expected bitrate value for the first input frame. For example, the one of the first plurality of encoded streams obtained by encoding the first input frame using the first main coding parameter value (also referred to as a "first main encoded data stream") can be directly selected as the output data stream. In some scenarios, the bitrate of the first main encoded data stream may differ from the expected bitrate for the first input frame by a relatively large value. In these scenarios, the expected bitrate for the first input frame can be subject back to the updated rate control model to obtain a new coding parameter value for encoding the first input frame, and the obtained encoded data stream can be output as the output data stream for the first input frame.

As another example, the output data stream for the first input frame may be the one of the first plurality of encoded streams having a corresponding bitrate of the first plurality of bitrate values that is closest to the expected bitrate value for the first input frame.

As another example, the output data stream for the first input frame may be the one of the first plurality of encoded streams having a corresponding bitrate of the first plurality of bitrate values that is not more than and closest to the expected bitrate value for the first input frame.

As another example, the output data stream for the first input frame may be the one of the first plurality of encoded streams having a corresponding bitrate of the first plurality of bitrate values that has a difference from the expected bitrate value for the first input frame within a preset range.

In some embodiments, the output data stream for the first input frame can be selected from the first plurality of encoded streams according to a current channel bandwidth. For example, the output data stream for the first input frame can be one of the first plurality of encoded streams that matches the current channel bandwidth. As such, the output data stream can be adapted to the time-varying channel bandwidth in real-time. That it, when the channel bandwidth varies with time, the output data stream can match the channel bandwidth in real-time.

In some other embodiments, the output data stream for the first input frame may be selected according to the current channel bandwidth and a target latency. The target latency may also be referred to as a control target of the latency, which represents an expected transmission latency.

For example, the output data stream for the first input frame may be one of the first plurality of encoded streams of which the transmission latency under the current channel bandwidth is closest to the target latency.

As another example, the output data stream for the first input frame may be one of the first plurality of encoded streams of which the transmission latency under the current channel bandwidth is not more than and closest to the target latency.

As a further example, the output data stream for the first input frame may be one of the first plurality of encoded streams with the highest bitrate among the first plurality of encoded streams, with which the difference the target latency and the transmission latency under the current channel bandwidth is within a preset range. Because a higher bitrate generally correspond to a higher encoding quality, this approach can ensure that the encoded data with the highest encoding quality can be selected when the target latency is satisfied.

In some embodiments, the output data stream for the first input frame may be selected according to the channel bandwidth, the target latency, and the encoding quality. That is, the selection of the output data stream for the first input frame can be based on a combination of the requirements of the channel bandwidth, the target latency, and the encoding quality.

In some embodiments, a cost function may be determined according to the channel bandwidth, the target latency, the encoding quality, and a target bitrate. The output data stream for the first input frame may be one of the first plurality of encoded data with the smallest value of the cost function.

For example, the cost function may be as follows:

$$\text{Cost} = A \times |\text{bitrate/bandwidth - target latency}| + B \times \text{encoding quality}$$

where Cost represents the cost, and A and B represent weights.

According to the requirements of different application scenarios, the values of A and B can be adjusted to bias towards the requirement of the encoding quality or the requirement of the latency control, e.g., the values of A and B can be adjusted to give more weight to the requirement of the encoding quality or to the requirement of the latency control in the calculation of Cost.

In some embodiments, a reconstructed frame obtained from the output data stream for the first input frame can be used as the context of a second input frame. That is, a reconstructed frame obtained from the output data stream for the first input frame can be used as a reference for the prediction of the second input frame.

At 709, a second input frame is encoded based on the updated rate control model. For example, a second plurality of coding parameter values for encoding the second input frame can be determined based on the updated rate control model, and the second input frame can be encoded using the second plurality of coding parameter values.

In some embodiments, the second plurality of coding parameter values for encoding the second input frame can be determined based on the updated rate control model and an expected bitrate for the second input frame (also referred to as a "second expected bitrate"). For example, one of the second plurality of coding parameter values can be determined based on the updated rate control model and the expected bitrate for the second input frame, which can be referred to as a second main coding parameter value. The remaining ones of the second plurality of coding parameter values, i.e., the coding parameter values of the second plurality of coding parameter values other than the second main coding parameter value, can be referred to as second auxiliary coding parameter values. Taking the R-Q model described above as an example, the coding parameter value corresponding to the expected bitrate for the second input frame calculated from the exponential of the second-order polynomial with the updated $a$, $b$, and $c$ parameters can be set as the second main coding parameter value.

In some embodiments, the second main coding parameter value and the first main coding parameter value are for a same encoding channel. The same encoding channel refers to, for example, a same single-rate encoder included in the multi-rate encoder as shown in FIG. 2, or a same processing circuit included in the multi-rate encoder as shown in FIG. 4.

In some embodiments, similar to the first auxiliary coding parameter values, the second auxiliary coding parameter values can be gradually deviated from the second main coding parameter value at a coding parameter interval. For example, the second auxiliary coding parameter values can be obtained by gradually stepping up and/or stepping down from the second main coding parameter value and arranged at the coding parameter interval. The coding parameter interval for the second auxiliary coding parameter values can be a constant interval or a variable interval. The coding parameter interval for the second auxiliary coding parameter values can be determined in a similar manner as that for determining the coding parameter interval for the first auxiliary coding parameter values, and thus the detailed description thereof is omitted.

In some other embodiments, the second auxiliary coding parameter values can be obtained based on selected bitrates for the second input images, also referred to as "second auxiliary bitrate values." Similar to the first auxiliary bitrate values, the second auxiliary bitrate values can be gradually deviated from the expected bitrate for the second input frame at a bitrate interval. The second auxiliary coding parameter values corresponding to the second auxiliary bitrate values can be calculated based on the rate control model. For example, the second auxiliary bitrate values can be obtained by gradually stepping up and/or stepping down from the expected bitrate for the second input images. The bitrate interval for the second auxiliary bitrate values can be a constant interval or a variable interval. The bitrate interval for the second auxiliary bitrate values can be determined in a similar manner as that for determining the bitrate interval for the first auxiliary bitrate values, and thus the detailed description thereof is omitted.

In some embodiments, the second input frame can be inter-encoded and/or intra-encoded using the second plurality of coding parameter values to generate a second plurality of encoded data streams. In some embodiments, encoding the second input frame using one of the second plurality of coding parameter values can include the prediction process, the transformation process, the quantization process, and the entropy encoding process.

One of the second plurality of encoded data streams can be selected as an output data stream corresponding to the second input frame. The selection of the output data stream corresponding to the second input frame can be similar to the selection of the output data stream corresponding to the first input frame, and thus detailed description thereof is omitted.

In some embodiments, the rate control model may also vary between image frames. That is, the updated rate control model obtained based on the first input frame may not accurately reflect the correspondence relationship between coding parameter and bitrate in the second input frame. In these embodiments, the rate control model can be further updated based on the second plurality of coding parameter values and the second plurality of bitrate values respectively corresponding to the second plurality of encoded data streams. To do so, the second main coding parameter value may be iteratively adjusted until the difference between a second actual bitrate and the expected bitrate value for the second input frame is within a preset range. The second actual bitrate value refers to a bitrate value obtained by encoding the second input frame using the second main coding parameter value.

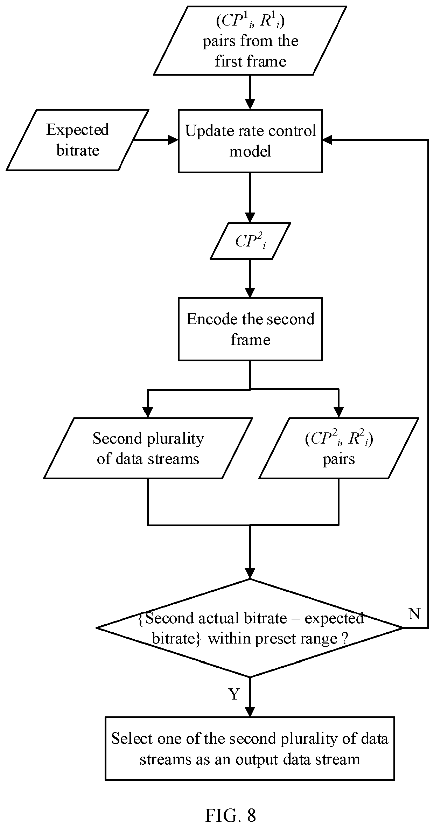

FIG. 8 is a flow chart showing a process of iteratively updating the rate control model consistent with the disclosure. As shown in FIG. 8, the rate control model can be first updated based on the first plurality of coding parameter values and the first plurality of bitrate values respectively corresponding to the first plurality of encoded data streams [denoted as letters $(CP^1_i, R^1_i)$] obtained according to the approaches (705) described above. The second plurality of coding parameter values (denoted as $CP^2_i$) can be determined based on the updated rate control model and the expected bitrate for the second input frame as described above. As described above, the coding parameter value calculated from the expected bitrate for the second input frame using the updated rate control model is the second main coding parameter value. The second frame can be encoded using $CP^2_i$ to generate the second plurality of data streams having a plurality of actual bitrates (denoted as $R^2_i$), including the data stream having the second actual bitrate value generated by encoding the second frame using the second main coding parameter value. If the difference between the second actual bitrate value and the expected bitrate value for the second input frame falls outside the preset range, the rate control model is updated according to the $(CP^2_i, R^2_i)$ pairs. The second main coding parameter value can be updated to a coding parameter corresponding to the expected bitrate value for the second input frame calculated from the further updated rate control model. On the other hand, if the above difference between the second actual bitrate value and the expected bitrate value for the second input frame is within the preset range, the iterative adjustment process can be stopped and one of the second plurality of data streams is output as the output data stream, as shown in FIG. 8.

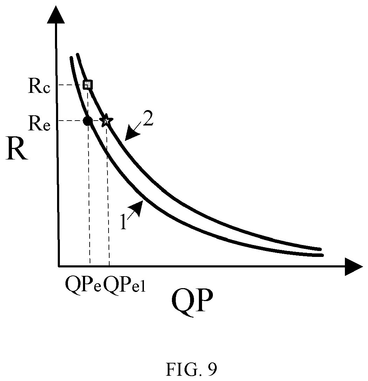

FIG. 9 schematically shows a variation of a bitrate-versus-QP curve (R-Q curve or R-Q model, i.e., an example of the rate control model) between frames. In FIG. 9, curve 1 represents the R-Q model obtained/updated based on the first input frame, i.e., a curve created by fitting the first plurality of coding parameter values and the first plurality of bitrate values respectively corresponding to the first plurality of encoded data streams. As shown in FIG. 9, when, for example, the complexities of the first input frame and the second input frame are different, the R-Q model may move from curve 1 to curve 2. Curve 2 is an actual R-Q curve corresponding to the second input frame, which is yet unknown. As shown in FIG. 9, if an expected bitrate for second input frame $R_e$ is desired, curve 1 gives a corresponding second main coding parameter value $QP_e$. However, if $QP_e$ is used for encoding the second input frame, the obtained encoded data stream will have an actual bitrate $R_c$ according to curve 2, which is different from the expected bitrate for second input frame $R_e$. Curve 1 can be iteratively updated according to, e.g., the method described above in connection with FIG. 8 to obtain curve 2 or a curve close to curve 2. Thereafter, according to the obtained curve 2 or the obtained curve close to curve 2, the second main coding parameter value $QP_{e1}$ that can result in the expected bitrate for second input frame $R_e$ can be obtained.

In some embodiments, obtaining the first plurality of coding parameter values (at 701) can further include iteratively adjusting the first main coding parameter value until the difference between an actual bitrate and the expected bitrate value for the first input frame is within a preset range. An actual bitrate value refers to a bitrate value obtained by encoding the first input frame using the first main coding parameter value.

Other embodiments of the disclosure will be apparent to those skilled in the art from consideration of the specification and practice of the embodiments disclosed herein. It is intended that the specification and examples be considered as exemplary only and not to limit the scope of the disclosure, with a true scope of the invention being indicated by the following claims.

**Claims**

1. A method for rate control, comprising:

encoding a first input frame (610) using a first plurality of coding parameter values ($CP_{1-N}$) to generate a first plurality of encoded data streams (630), each of the first plurality of encoded data streams (630) being generated using a corresponding coding parameter value of the first plurality of coding parameter values ($CP_{1-N}$) and each of the first plurality of encoded data streams (630) having a corresponding bitrate of a first plurality of bitrate values ($R_{1-N}$);

updating a rate control model (670) representing a correspondence between coding parameter (CP) and bitrate (R) based on the first plurality of coding parameter values ($CP_{1-N}$) and the first plurality of bitrate values ($R_{1-N}$) respectively corresponding to the first plurality of encoded data streams (630); and

encoding a second input frame (610) based on the updated rate control model (670),

wherein encoding the first input frame (610) comprises implementing a plurality of separate encoding processes on the first input frame (610) to generate the first plurality of encoded data streams (630), each of the plurality of separate encoding processes including encoding the first input frame (610) using one of the first plurality of coding parameter values ($CP_{1-N}$) to generate a corresponding one of the first plurality of encoded data streams (630);

**characterized in that**

encoding the first input frame (610) comprises implementing the plurality of separate encoding processes including a common process on the first input frame (610),

wherein the common process on the first input frame (610) is shared by the plurality of separate encoding processes and is for prediction (302) of the second input frame.

2. The method according to claim 1, wherein the first plurality of coding parameter values ($CP_{1-N}$) are provided by the rate control model (670) based at least in part on an expected bitrate for the first input frame (610).

3. The method according to claim 2, wherein one of the first plurality of coding parameter values ($CP_{1-N}$) is provided by the rate control model (670) based on the expected bitrate for the first input frame (610), and others of the first plurality of coding parameter values ($CP_{1-N}$) are gradually deviated from the one of the first plurality of coding parameter values ($CP_{1-N}$) at a constant or a variable interval.

4. The method according to claim 2, wherein:

the first plurality of coding parameter values ($CP_{1-N}$) include a main coding parameter value calculated from the expected bitrate value for the first input frame (610) according to the rate control model (670), and updating the rate control model (670) comprises iteratively updating the rate control model (670) using the first input frame (610) until a difference between the expected bitrate value for the first input frame (610) and an actual bitrate value obtained by encoding the first input frame (610) using the main coding parameter value is within a preset range.

5. The method according to claim 1, wherein encoding the second input frame (610) comprises determining a coding parameter value for the second input frame (610) based on the updated rate control model (670) and an expected bitrate for the second input frame (610).

6. The method according to claim 1, further comprising:

determining a second plurality of coding parameter values ($CP_{1-N}$) for encoding the second input frame (610) based at least in part on the updated rate control model (670); and

encoding the second input frame (610) using the second plurality of coding parameter values ($CP_{1-N}$).

7. The method according to claim 6, wherein determining the second plurality of coding parameter values ($CP_{1-N}$) for the second input frame (610) comprises:

determining one of the second plurality of coding parameter values ($CP_{1-N}$) for the second input frame (610) based on an expected bitrate for the second input frame (610) according to the updated rate control model (670), and

gradually deviating others of the second plurality of coding parameter values ($CP_{1-N}$) from the one of the second plurality of coding parameter values ($CP_{1-N}$) at a constant or a variable interval.

8. The method of claim 1, the method further comprising:

selecting an encoded data stream as an output data stream for the first input frame from the first plurality of encoded data streams (630) based on at least one of an expected bitrate value for the first input frame (610), a channel bandwidth, a transmission latency, or an encoding quality.

9. The method according to claim 8, wherein:

the first plurality of coding parameter values ($CP_{1-N}$) include a main coding parameter value calculated from the expected bitrate value for the first input frame (610) according to the rate control model (670), and selecting the encoded data stream as the output data stream comprises selecting one of the first plurality of encoded data streams (630) obtained by encoding the first input frame (610) using the main coding parameter value as the output data stream.

10. The method according to claim 8, wherein selecting the encoded data stream as the output data stream comprises selecting one of the first plurality of encoded data streams (630) having a corresponding bitrate of the first plurality of bitrate values ($R_{1-N}$) that is closest to the expected bitrate value for the first input frame (610) as the output data stream.

11. The method according to claim 10, wherein selecting the encoded data stream as the output data stream comprises selecting one of the first plurality of encoded data streams (630) having a corresponding bitrate of the first plurality of bitrate values ($R_{1-N}$) that is not more than and is closest to the expected bitrate value for the first input frame (610) as the output data stream.

12. The method according to claim 11, wherein selecting the encoded data stream as the output data stream comprises selecting one of the first plurality of encoded data streams (630) having a corresponding bitrate of the first plurality of bitrate values ($R_{1-N}$) that has a difference from the expected bitrate value for the first input frame (610) within a preset range as the output data stream.

13. An apparatus for rate control in data coding, comprising:

one or more processors; and
one or more memories coupled to the one or more processors and storing instructions that, when executed by the one or more processors, cause the one or more processors to perform the operations of the method of any one of claims 1 to 12.

**Patentansprüche**

1. Verfahren zur Ratensteuerung, das Folgendes umfasst:

Codieren eines ersten Eingangsframes (610) unter Verwendung einer ersten Vielzahl von Codierparameterwerten ($CP_{1-N}$), um eine erste Vielzahl von codierten Datenströmen (630) zu erzeugen, wobei jeder der ersten Vielzahl von codierten Datenströmen (630) unter Verwendung eines entsprechenden Codierparameterwertes der ersten Vielzahl von Codierparameterwerten ($CP_{1-N}$) erzeugt wird und jeder der ersten Vielzahl von codierten Datenströmen (630) eine entsprechende Bitrate einer ersten Vielzahl von Bitratenwerten ($R_{1-N}$) aufweist;
Aktualisieren eines Ratensteuermodells (670), das eine Entsprechung zwischen Codierparameter (CP) und Bitrate (R) repräsentiert, auf Basis der ersten Vielzahl von Codierparameterwerten ($CP_{1-N}$) und der ersten Vielzahl von Bitratenwerten ($R_{1-N}$), die jeweils der ersten Vielzahl von codierten Datenströmen (630) entsprechen; und
Codieren eines zweiten Eingangsframes (610) auf Basis des aktualisierten Ratensteuermodells (670),
wobei das Codieren des ersten Eingangsframes (610) das Implementieren einer Vielzahl von separaten Codierprozessen am ersten Eingangsframe (610), um die erste Vielzahl von codierten Datenströmen (630) zu erzeugen, umfasst, wobei jeder der Vielzahl von separaten Codierprozessen das Codieren des ersten Eingangsframes (610) unter Verwendung von einem der ersten Vielzahl von Codierparameterwerten ($CP_{1-N}$), um einen entsprechenden der ersten Vielzahl von codierten Datenströmen (630) zu erzeugen, beinhaltet;
**dadurch gekennzeichnet, dass**
das Codieren des ersten Eingangsframes (610) das Implementieren der Vielzahl von separaten Codierprozessen, die einen gemeinsamen Prozess am ersten Eingangsframe (610) beinhalten, umfasst,
wobei der gemeinsame Prozess am ersten Eingangsframe (610) von der Vielzahl von separaten Codierprozessen gemeinsam verwendet wird und der Vorhersage (302) des zweiten Eingangsframes dient.

**2.** Verfahren nach Anspruch 1, wobei die erste Vielzahl von Codierparameterwerten ($CP_{1-N}$) vom Ratensteuermodell (670) mindestens teilweise auf Basis einer erwarteten Bitrate für den ersten Eingangsframe (610) bereitgestellt werden.

**3.** Verfahren nach Anspruch 2, wobei einer der ersten Vielzahl von Codierparameterwerten ($CP_{1-N}$) vom Ratensteuermodell (670) auf Basis der erwarteten Bitrate für den ersten Eingangsframe (610) bereitgestellt wird und andere der ersten Vielzahl von Codierparameterwerten ($CP_{1-N}$) in einem konstanten oder variablen Intervall allmählich von dem einen der Vielzahl von Codierparameterwerten ($CP_{1-N}$) abgeleitet werden.

**4.** Verfahren nach Anspruch 2, wobei:

die erste Vielzahl von Codierparameterwerten ($CP_{1-N}$) einen Hauptcodierparameterwert beinhalten, der gemäß dem Ratensteuermodell (670) aus dem erwarteten Bitratenwert für den ersten Eingangsframe (610) berechnet wird, und

das Aktualisieren des Ratensteuermodells (670) das wiederholte Aktualisieren des Ratensteuermodells (670) unter Verwendung des ersten Eingangsframes (610), bis eine Differenz zwischen dem erwarteten Bitratenwert für den ersten Eingangsframe (610) und einem tatsächlichen Bitratenwert, der durch Codieren des ersten Eingangsframes (610) unter Verwendung des Hauptcodierparameterwertes erhalten wird, in einem voreingestellten Bereich liegt, umfasst.

**5.** Verfahren nach Anspruch 1, wobei das Codieren des zweiten Eingangsframes (610) das Bestimmen eines Codierparameterwertes für den zweiten Eingangsframe (610) auf Basis des aktualisierten Ratensteuermodells (670) und einer erwarteten Bitrate für den zweiten Eingangsframe (610) umfasst.

**6.** Verfahren nach Anspruch 1, das ferner Folgendes umfasst:

Bestimmen einer zweiten Vielzahl von Codierparameterwerten ($CP_{1-N}$) zum Codieren des zweiten Eingangsframes (610) mindestens teilweise auf Basis des aktualisierten Ratensteuermodells (670) und
Codieren des zweiten Eingangsframes (610) unter Verwendung der zweiten Vielzahl von Codierparameterwerten ($CP_{1-N}$).

**7.** Verfahren nach Anspruch 6, wobei das Bestimmen der zweiten Vielzahl von Codierparameterwerten ($CP_{1-N}$) für den zweiten Eingangsframe (610) Folgendes umfasst:

Bestimmen von einem der zweiten Vielzahl von Codierparameterwerten ($CP_{1-N}$) für den zweiten Eingangsframe (610) auf Basis einer erwarteten Bitrate für den zweiten Eingangsframe (610) gemäß dem aktualisierten Ratensteuermodell (670) und
allmähliches Ableiten von anderen der zweiten Vielzahl von Codierparameterwerten ($CP_{1-N}$) aus dem einen der zweiten Vielzahl von Codierparameterwerten ($CP_{1-N}$) in einem konstanten oder einem variablen Intervall.

**8.** Verfahren nach Anspruch 1, wobei das Verfahren ferner Folgendes umfasst:
Auswählen eines codierten Datenstroms als einen Ausgangsdatenstrom für den ersten Eingangsframe aus der ersten Vielzahl von codierten Datenströmen (630) mindestens teilweise auf Basis eines erwarteten Bitratenwertes für den ersten Eingangsframe (610), einer Kanalbandbreite, einer Übertragungslatenz oder einer Codierqualität.

**9.** Verfahren nach Anspruch 8, wobei:

die erste Vielzahl von Codierparameterwerten ($CP_{1-N}$) einen Hauptcodierparameterwert beinhalten, der gemäß dem Ratensteuermodell (670) aus dem erwarteten Bitratenwert für den ersten Eingangsframe (610) berechnet wird, und
das Auswählen des codierten Datenstroms als den Ausgangsdatenstrom das Auswählen von einem der ersten Vielzahl von codierten Datenströmen (630), der durch Codieren des ersten Eingangsframes (610) unter Verwendung des Hauptcodierparameterwertes erhalten wird, als den Ausgangsdatenstrom umfasst.

**10.** Verfahren nach Anspruch 8, wobei das Auswählen des codierten Datenstroms als den Ausgangsdatenstrom das Auswählen von einem der ersten Vielzahl von codierten Datenströmen (630), der eine entsprechende Bitrate der ersten Vielzahl von Bitratenwerten ($R_{1-N}$) aufweist, die dem erwarteten Bitratenwert für den ersten Eingangsframe (610) am nächsten liegt, als den Ausgangsdatenstrom umfasst.

**11.** Verfahren nach Anspruch 10, wobei das Auswählen des codierten Datenstroms als den Ausgangsdatenstrom das Auswählen von einem der ersten Vielzahl von codierten Datenströmen (630), der eine entsprechende Bitrate der ersten Vielzahl von Bitratenwerten ($R_{1-N}$) aufweist, die nicht höher ist als der erwartete Bitratenwert für den ersten Eingangsframe (610) und demselben am nächsten liegt, als den Ausgangsdatenstrom umfasst.

**12.** Verfahren nach Anspruch 11, wobei das Auswählen des codierten Datenstroms als den Ausgangsdatenstrom das Auswählen von einem der ersten Vielzahl von codierten Datenströmen (630), der eine entsprechende Bitrate der ersten Vielzahl von Bitratenwerten ($R_{1-N}$) aufweist, die eine Differenz zum erwarteten Bitratenwert für den ersten Eingangsframe (610) innerhalb eines voreingestellten Bereichs aufweist, als den Ausgangsdatenstrom umfasst.

**13.** Vorrichtung für die Ratensteuerung bei der Datencodierung, die Folgendes umfasst:

einen oder mehrere Prozessoren und
einen oder mehrere Speicher, die an den einen oder die mehreren Prozessoren gekoppelt sind und in denen Anweisungen gespeichert sind, die, wenn sie von dem einen oder den mehreren Prozessoren ausgeführt werden, den einen oder die mehreren Prozessoren veranlassen, die Operationen des Verfahrens nach einem der Ansprüche 1 bis 12 durchzuführen.


**Revendications**

**1.** Procédé de commande de débit, dans lequel le procédé comprend les étapes ci-dessous consistant à :

coder une première trame d'entrée (610) en faisant appel à une première pluralité de valeurs de paramètres de codage ($CP_{1-N}$) en vue de générer une première pluralité de flux de données codées (630), chaque flux de la première pluralité de flux de données codées (630) étant généré en utilisant une valeur de paramètre de codage correspondante de la première pluralité de valeurs de paramètres de codage ($CP_{1-N}$), et chaque flux de la première pluralité de flux de données codées (630) présentant un débit binaire correspondant d'une première pluralité de valeurs de débit binaire ($R_{1-N}$) ;
mettre à jour un modèle de commande de débit (670) représentant une correspondance entre un paramètre de codage (CP) et un débit binaire (R) sur la base de la première pluralité de valeurs de paramètres de codage ($CP_{1-N}$) et de la première pluralité de valeurs de débit binaire ($R_{1-N}$) correspondant respectivement à la première pluralité de flux de données codées (630) ; et
coder une seconde trame d'entrée (610) sur la base du modèle de commande de débit mis à jour (670) ;
dans lequel l'étape de codage de la première trame d'entrée (610) comprend l'étape consistant à mettre en oeuvre une pluralité de processus de codage individuels sur la première trame d'entrée (610), en vue de générer la première pluralité de flux de données codées (630), dans lequel chaque processus de la pluralité de processus de codage individuels inclut l'étape consistant à coder la première trame d'entrée (610) en utilisant une valeur de la première pluralité de valeurs de paramètres de codage ($CP_{1-N}$) en vue de générer un flux correspondant de la première pluralité de flux de données codées (630) ;
**caractérisé en ce que** :

l'étape de codage de la première trame d'entrée (610) comprend l'étape consistant à mettre en oeuvre la pluralité de processus de codage individuels, y compris un processus commun sur la première trame d'entrée (610) ;
dans lequel le processus commun sur la première trame d'entrée (610) est partagé par la pluralité de processus de codage individuels et est destiné à la prédiction (302) de la seconde trame d'entrée.

**2.** Procédé selon la revendication 1, dans lequel la première pluralité de valeurs de paramètres de codage ($CP_{1-N}$) est fournie par le modèle de commande de débit (670) sur la base, au moins en partie, d'un débit binaire attendu pour la première trame d'entrée (610).

**3.** Procédé selon la revendication 2, dans lequel une valeur de la première pluralité de valeurs de paramètres de codage ($CP_{1-N}$) est fournie par le modèle de commande de débit (670) sur la base du débit binaire attendu pour la première trame d'entrée (610), et d'autres valeurs de la première pluralité de valeurs de paramètres de codage ($CP_{1-N}$) sont progressivement déviées de ladite une valeur de la première pluralité de valeurs de paramètres de codage ($CP_{1-N}$) à un intervalle constant ou variable.

**4.** Procédé selon la revendication 2, dans lequel :

la première pluralité de valeurs de paramètres de codage (CP$_{1-N}$) inclut une valeur de paramètre de codage principal calculée à partir de la valeur de débit binaire attendu pour la première trame d'entrée (610) selon le modèle de commande de débit (670) ; et
l'étape de mise à jour du modèle de commande de débit (670) comprend l'étape consistant à mettre à jour, de manière itérative, le modèle de commande de débit (670), en utilisant la première trame d'entrée (610) jusqu'à ce qu'une différence entre la valeur de débit binaire attendu pour la première trame d'entrée (610) et une valeur de débit binaire réel obtenue en codant la première trame d'entrée (610) au moyen de la valeur de paramètre de codage principal se situe dans une plage prédéfinie.

**5.** Procédé selon la revendication 1, dans lequel l'étape de codage de la seconde trame d'entrée (610) comprend l'étape consistant à déterminer une valeur de paramètre de codage pour la seconde trame d'entrée (610) sur la base du modèle de commande de débit mis à jour (670) et d'un débit binaire attendu pour la seconde trame d'entrée (610).

**6.** Procédé selon la revendication 1, comprenant en outre les étapes ci-dessous consistant à :

déterminer une seconde pluralité de valeurs de paramètres de codage (CP$_{1-N}$) pour coder la seconde trame d'entrée (610) sur la base, au moins en partie, du modèle de commande de débit mis à jour (670) ; et
coder la seconde trame d'entrée (610) en utilisant la seconde pluralité de valeurs de paramètres de codage (CP$_{1-N}$).

**7.** Procédé selon la revendication 6, dans lequel l'étape de détermination de la seconde pluralité de valeurs de paramètres de codage (CP$_{1-N}$) pour la seconde trame d'entrée (610) comprend les étapes ci-dessous consistant à :

déterminer une valeur de la seconde pluralité de valeurs de paramètres de codage (CP$_{1-N}$) pour la seconde trame d'entrée (610), sur la base d'un débit binaire attendu pour la seconde trame d'entrée (610) selon le modèle de commande de débit mis à jour (670) ; et
dévier progressivement d'autres valeurs de la seconde pluralité de valeurs de paramètres de codage (CP$_{1-N}$) de ladite une valeur de la seconde pluralité de valeurs de paramètres de codage (CP$_{1-N}$) à un intervalle constant ou variable.

**8.** Procédé selon la revendication 1, le procédé comprenant en outre l'étape ci-dessous consistant à :
sélectionner un flux de données codées en tant qu'un flux de données de sortie pour la première trame d'entrée, à partir de la première pluralité de flux de données codées (630), sur la base d'au moins l'une parmi une valeur de débit binaire attendu pour la première trame d'entrée (610), une largeur de bande de canal, une latence de transmission ou une qualité de codage.

**9.** Procédé selon la revendication 8, dans lequel :

la première pluralité de valeurs de paramètres de codage (CP$_{1-N}$) inclut une valeur de paramètre de codage principal calculée à partir de la valeur de débit binaire attendu pour la première trame d'entrée (610) selon le modèle de commande de débit (670) ; et
l'étape de sélection du flux de données codées en tant que le flux de données de sortie comprend l'étape consistant à sélectionner un flux de la première pluralité de flux de données codées (630) obtenue en codant la première trame d'entrée (610), en utilisant la valeur de paramètre de codage principal en tant que le flux de données de sortie.

**10.** Procédé selon la revendication 8, dans lequel l'étape de sélection du flux de données codées, en tant que le flux de données de sortie, comprend l'étape consistant à sélectionner un flux de la première pluralité de flux de données codées (630) présentant un débit binaire correspondant de la première pluralité de valeurs de débit binaire (R$_{1-N}$) qui est le plus proche de la valeur de débit binaire attendu pour la première trame d'entrée (610), en tant que le flux de données de sortie.

**11.** Procédé selon la revendication 10, dans lequel l'étape de sélection du flux de données codées, en tant que le flux de données de sortie, comprend l'étape consistant à sélectionner un flux de la première pluralité de flux de données codées (630) présentant un débit binaire correspondant de la première pluralité de valeurs de débit binaire (R$_{1-N}$)

qui n'est pas supérieur et est le plus proche de la valeur de débit binaire attendu pour la première trame d'entrée (610), en tant que le flux de données de sortie.

12. Procédé selon la revendication 11, dans lequel l'étape de sélection du flux de données codées, en tant que le flux de données de sortie, comprend l'étape consistant à sélectionner un flux de la première pluralité de flux de données codées (630) présentant un débit binaire correspondant de la première pluralité de valeurs de débit binaire ($R_{1-N}$) qui présente une différence par rapport à la valeur de débit binaire attendu pour la première trame d'entrée (610) dans une plage prédéfinie, en tant que le flux de données de sortie.

13. Appareil pour une commande de débit dans un codage de données, comprenant :

un ou plusieurs processeurs ; et
une ou plusieurs mémoires couplées audit un ou auxdits plusieurs processeurs et stockant des instructions qui, lorsqu'elles sont exécutées par ledit un ou lesdits plusieurs processeurs, amènent ledit un ou lesdits plusieurs processeurs à mettre en oeuvre les opérations du procédé selon l'une quelconque des revendications 1 à 12.

<u>100</u>

FIG. 1

<u>130</u>

FIG. 2

FIG. 3

FIG. 4

<u>130</u>

Processor
130-1

Memory
130-2

FIG. 5

Frame 610

Encoded data streams 630

1

2

N

Samples 650

$(CP_1,R_1)$

$(CP_2,R_2)$

$(CP_N,R_N)$

Rate control
model <u>670</u>

$R = f(CP)$

$R$

$(CP_1,R_1)$

$(CP_2,R_2)$

$(CP_N,R_N)$

CP

FIG. 6

700

Obtain a first plurality of coding parameter values ⟶ 701

Encode a first input frame using the first plurality of coding parameter values to generate a first plurality of encoded data streams ⟶ 703

Update a rate control model representing a correspondence between coding parameter and bitrate based on the first plurality of coding parameter values and the first plurality of bitrate values respectively corresponding to the first plurality of encoded data streams ⟶ 705

Select one of the first plurality of encoded data streams as an output data stream for the first input frame ⟶ 707

Encode a second input frame based on the updated rate control model ⟶ 709

FIG. 7

FIG. 8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9817065 A1
- US 2010266047 A1